# EUROPÄISCHE PATENTSCHRIFT

(11) **EP 2 651 825 B1**
(45) Veröffentlichungstag und Bekanntmachung des Hinweises auf die Patenterteilung: **02.05.2018**
(21) Anmeldenummer: 11793405.9
(22) Anmeldetag: 02.12.2011
(51) Int. Cl.: C01B 33/04, C01B 33/107, B01J 31/02

(54) **VERFAHREN ZUR HERSTELLUNG HÖHERER HALOGEN- UND HYDRIDOSILANE**
PROCESS FOR PREPARING HIGHER HALOSILANES AND HYDRIDOSILANES
PROCÉDÉ DE PRODUCTION D'HALOSILANES ET D'HYDRUROSILANES SUPÉRIEURS

(30) Priorität: 14.12.2010 DE 102010062984
(43) Veröffentlichungstag der Anmeldung: 23.10.2013
(73) Patentinhaber: Evonik Degussa GmbH, 45128 Essen (DE)
(72) Erfinder: WIEBER, Stephan, 76137 Karlsruhe (DE); PATZ, Matthias, 46240 Bottrop (DE); STÜGER, Harald, A-8042 Graz (AT); WALKNER, Christoph, A-8010 Graz (AT)
(86) Internationale Anmeldenummer: PCT/EP2011/071621
(87) Internationale Veröffentlichungsnummer: WO 2012/080003

(56) Entgegenhaltungen:
- EP-A1- 2 006 250
- WO-A1-2008/051328
- DATABASE WPI Week 198925 Thomson Scientific, London, GB; AN 1989-183483 XP002671583, & JP 1 122915 A (OSAKA TITANIUM SEIZO KK) 16. Mai 1989 (1989-05-16)
- DATABASE WPI Week 198714 Thomson Scientific, London, GB; AN 1987-098160 XP002671584, & JP 62 046916 A (TOA NENRYO KOGYO KK) 28. Februar 1987 (1987-02-28)
- DATABASE WPI Week 198520 Thomson Scientific, London, GB; AN 1985-119934 XP002671585, & JP 60 060915 A (TOKUYAMA SODA KK) 8. April 1985 (1985-04-08)

## Beschreibung

Die Erfindung betrifft ein Verfahren zur Herstellung höherer Halogensilane durch Disproportionierung von niederen Halogensilanen. Die Erfindung betrifft weiterhin ein Verfahren zur Herstellung höherer Hydridosilane aus den durch Disproportionierung hergestellten höheren Halogensilanen. Die Erfindung betrifft des Weiteren Gemische enthaltend mindestens ein höheres Halogensilan oder mindestens ein höheres Hydridosilan hergestellt nach den genannten Verfahren. Schließlich betrifft die Erfindung die Verwendung eines solchen Gemisches enthaltend mindestens ein höheres Hydridosilan zur Herstellung elektronischer oder optoelektronischer Bauteilschichten oder zur Herstellung siliciumhaltiger Schichten.

Hydridosilane bzw. ihre Gemische sind in der Literatur als mögliche Edukte für die Erzeugung von Siliciumschichten beschrieben. Dabei sind unter Hydridosilanen Verbindungen zu verstehen, die im Wesentlichen lediglich Silicium- und Wasserstoffatome enthalten. Hydridosilane können gasförmig, flüssig oder fest sein und sind - im Falle von Feststoffen - im Wesentlichen löslich in Lösemitteln wie Toluol oder Cyclohexan oder in flüssigen Silanen wie Cyclopentasilan. Als Beispiele seien Monosilan, Disilan, Trisilan, Cyclopentasilan und Neopentasilan genannt. Hydridosilane mit mindestens drei bzw. vier Siliciumatomen können eine lineare, verzweigte oder (ggf. bi-/poly-)cyclische Struktur mit Si-H-Bindungen aufweisen und lassen sich durch die jeweiligen generischen Formeln SiₙH₂ₙ₊₂ (linear bzw. verzweigt; mit n ≥ 2), SiₙH₂ₙ (cyclisch; mit n ≥ 3) oder SiₙH₂₍ₙ₋ᵢ₎ (bi- bzw. polycyclisch; n ≥ 4; i = {Zahl der Cyclen} - 1) beschreiben.

Viele Verfahren zur Herstellung von Hydridosilanen beruhen auf einer Dehydropolymerisationsreaktion von niederen Hydridosilanen, insbesondere SiH₄, zu höheren Silanen unter formaler H₂-Abspaltung. Die Dehydropolymerisationsreaktion kann dabei 1) thermisch (US 6,027,705 A für den Fall, dass kein Katalysator eingesetzt wird) und/oder 2) durch Einsatz von Katalysatoren wie a) elementaren Übergangsmetallen (heterogene Katalyse; US 6,027,705 A für den Fall, dass Platingruppen-Metalle, d.h. Ru, Rh, Pd, Os, Ir, Pt, eingesetzt werden; US 5,700,400 A für Metalle der Gruppe 3B - 7B und 8 - d.h. die Übergangsmetalle/Lanthanide ohne Cu- und Zn-Gruppe), b) Nichtmetalloxiden (heterogene Katalyse; US 6,027,705 A für den Fall, dass Al₂O₃ oder SiO₂ eingesetzt werden), c) hydridischen Cyclopentadienyl-Komplexen von Scandium, Yttrium oder seltenen Erden (homogene Katalyse; US 4,965,386 A, US 5,252,766 A), d) Übergangsmetall-Komplexen (homogene Katalyse; US 5,700,400 A für Komplexe der Metalle der Gruppe 3B - 7B und 8 - d.h. die Übergangsmetalle/Lanthanide ohne Cu- und Zn-Gruppe; JP 02-184513 A) oder e) bestimmten auf einem Träger immobilisierten Übergangsmetallen (heterogene Katalyse; US 6,027,705 A für den Fall, dass Platingruppen-Metalle auf einem Träger wie z.B. SiO₂ eingesetzt werden, US 5,700,400 A für auf Kohlenstoff, SiO₂ oder Al₂O₃ immobilisiertes Ruthenium, Rhodium, Palladium oder Platin) oder Übergangsmetallkomplexen (heterogene Katalyse, US 6,027,705 A für den Fall, dass Platingruppen-Metallkomplexe auf einem Träger wie z.B. SiO₂ eingesetzt werden) durchgeführt werden. All diese Verfahren weisen jedoch den Nachteil auf, dass die eingesetzten niederen Hydridosilane selbst erst aufwändig hergestellt werden müssen. Weiterhin ist an diesen Verfahren nachteilig, dass sie aufgrund der Selbstentzündlichkeit der Edukte einen hohen apparativen Aufwand erfordern. Schließlich konnten mit diesen Verfahren bislang keine ausreichend hohen Ausbeuten realisiert werden. Weiterhin ist eine aufwändige Reinigung der jeweiligen Zielprodukte erforderlich.

Ein anderes Verfahren zur Herstellung von Hydridosilanen, bei dem Dihalosilane, ggf. zusammen mit Trihalosilanen und/oder Tetrahalosilanen, auf elektrochemischem Wege umgesetzt werden, beschreibt z.B. EP 0 673 960 A1. Auch dieses Verfahren hat jedoch den Nachteil, dass es aufgrund der elektrochemischen Reaktionsführung einen hohen apparativen Aufwand und weiterhin hohe Energiedichten erfordert. Schließlich sind auch hier zuvor die jeweiligen Di- bzw. Trihalosilane erst aufwändig herzustellen.

Alternativ können höhere Hydridosilane auch durch Dehalogenierung und Polykondensation von Halosilanen mit Alkalimetallen hergestellt werden (GB 2 077 710 A). Auch dieses Verfahren führt jedoch zu nicht ausreichend hohen Ausbeuten.

JP 1122915 A offenbart die Disproportionierung von halogenhaltigen Monosilanen der Formel SiHₙX₍₄₋ₙ₎ mit X = Halogen und n = 1 bis 3 zu Monosilan SiH₄, wobei V. Hauptgruppenelementverbindungen, wie beispielsweise Triphenylphosphan, verwendet werden.

WO 2008/051328 A1 lehrt, zur Erzeugung Neopentasilan-haltiger Zusammensetzungen ein Hexahalodisilan der Formel X₃SiSiX₃ mit einem tertiären Aminkatalysator unter Bildung einer ersten Mischung umfassend Tetrakis(trihalosilyl)silan (Si(SiX₃)₄) und Tetrahalosilan umzusetzen. Die beiden Hauptbestandteile Tetrakis(trihalosilyl)silan und Tetrahalosilan können voneinander separiert werden. Das erhaltene Tetrakis(trihalosilyl)silan kann durch Hydrierung mit Diisobutylaluminiumhydrid in Neopentasilan (Si(SiH₃)₄) umgewandelt werden. Allerdings zeigt dieses Verfahren den Nachteil, dass nur Neopentasilan zugänglich ist.

DE 102005024041 A1 beschreibt, dass halogenierte Polysilane unter Erzeugung einer Plasmaentladung von Halogensilanen der Form HₙSiX₍₄₋ₙ₎ (X = F, Cl, Br, I; n = 0-3) gebildet werden können. Dieser Prozess läuft unter Vakuum und in mäßigen Ausbeuten.

DE 102008042934 A1 lehrt, dass die Herstellung von Neopentasilanen der Form Si(SiR₃)₄ (R = H, Cl, Br, I) aus R₃Si-(Si)ₓ-SiR₃ (x = 1-5) in Gegenwart einer Etherverbindung durchgeführt werden kann. Nach diesem Verfahren sind nur Neopentasilane zugänglich.

Aufgabe der vorliegenden Erfindung war es nun, die Nachteile des Standes der Technik zu vermeiden und ein Verfahren bereitzustellen, mit dem höhere Halogensilane oder Gemische höherer Halogensilane hergestellt werden können, die gegebenenfalls ohne großen Isolierungs- und/oder Aufreinigungsaufwand in die entsprechenden höheren Hydridosilane oder Gemische höherer Hydridosilane überführt werden können.

Diese Aufgabe wird gelöst durch ein Verfahren zur Herstellung eines höheren Halogensilans, wobei mindestens ein Halogensilan der generischen Formel SiₙX₂ₙ₊₂ mit n ≥ 2 und X = F, Cl, Br und/oder I eingesetzt und durch Disproportionierung zu einem Produktgemisch enthaltend mindestens ein höheres Halogensilan der generischen Formel SiₘX₂ₘ₊₂ mit m > n und X = F, Cl, Br und/oder I und mindestens ein niederes Halogensilan der generischen Formel SiₐX₂ₐ₊₂ mit a = 1-2 und X = F, Cl, Br und/oder I umgesetzt wird, dadurch gekennzeichnet, dass die Umsetzung durch mindestens ein tertiäres Phosphan, ausgewählt aus der Gruppe, die tertiäre Alkylphosphane, z. B. Trimethylphosphan, Triethylphosphan, tertiäre Arylphosphane, z. B. Triphenylphosphan, tertiäre zweizähnige Phosphane oder Mischungen davon umfasst, katalysiert wird.

Welches Halogensilan der generischen Formel SiₙX₂ₙ₊₂ mit n ≥ 2 und X = F, Cl, Br und/oder I eingesetzt wird, oder ob ein Gemisch aus verschiedenen, jedoch mit jeweils gleichen Halogenen substituierten Silanen verwendet wird, hat geringe Auswirkungen auf die Zusammensetzung des Produktgemisches enthaltend das mindestens eine höhere Halogensilan und das mindestens eine niedere Halogensilan. So entstehen zum Beispiel aus Si₂Cl₆ und/oder Si₃Cl₈ und/oder SiₙClₘ in der Regel immer Si₅Cl₁₂, SiCl₄, höhere Silane sowie gegebenenfalls bei unvollständiger Umsetzung Si₂Cl₆ als Zwischenprodukt.

Die Reaktionszeiten liegen im Bereich der entsprechenden aminkatalysierten Verfahren.

Vorteil des erfindungsgemäßen Verfahrens gegenüber zum Beispiel aminkatalysierten Verfahren ist, dass auch höhere Halogensilane oder Gemische höherer Halogensilane hergestellt werden können. Mit aminkatalysierten Verfahren ist nur Si₅Cl₁₂ zugänglich.

Bei dem erfindungsgemäß einsetzbaren Katalysator handelt es sich um einen Katalysator der Klasse der tertiären Phosphane. Diese Klasse von Katalysatoren ist neuartig für die Umlagerungsreaktionen von Halogensilanen.

Ganz besonders bevorzugt sind tertiäre Alkylphosphane.

Von tertiären Alkylphosphanen ist insbesondere Trimethylphosphan besonders bevorzugt, da mit Trimethylphosphan als Katalysator der Anteil an höheren Silanen SiₘX₂ₘ₊₂ mit m > n und X = F, Cl, Br und/oder I neben SiX₄, Si₂X₆ und Si₅X₁₂, wobei bevorzugt X = Cl ist, besonders groß ist.

Der Anteil des mindestens einen Katalysators, bezogen auf die eingesetzte Menge an Halogensilan, beträgt bei dem erfindungsgemäßen Verfahren bevorzugt zwischen 0,001 und 5 Gew.-%.

Die Disproportionierungsreaktion kann in An- oder Abwesenheit eines Lösemittels erfolgen. Der Katalysator kann dabei im Falle der An- oder Abwesenheit eines Lösungsmittels als Reinsubstanz oder im Falle der Anwesenheit eines Lösungsmittels als Aufschlämmung in einem Lösemittel wie z. B. Diethylether eingesetzt werden. Im Falle des Einsatzes als Aufschlämmung beträgt der Anteil des Katalysators bevorzugt zwischen 1 und 25 Gew.-%, bezogen auf die Gesamtmasse der Aufschlämmung.

Bei den im erfindungsgemäßen Verfahren eingesetzten Halogensilanen handelt es sich um Verbindungen, die im Wesentlichen nur aus Siliciumatomen und Halogenatomen (Halogen = Fluor, Chlor, Brom, Iod) bestehen und die mindestens zwei Siliciumatome aufweisen.

Halogensilane der generischen Formel SiₙX₂ₙ₊₂ mit mindestens drei bzw. vier Siliciumatomen können eine lineare oder verzweigte Struktur aufweisen.

Besonders gut für das erfindungsgemäße Verfahren einsetzbar sind lineare Halogensilane der generischen Formel SiₙX₂ₙ₊₂.

Bevorzugt ist das mindestens eine Halogensilan der generischen Formel SiₙX₂ₙ₊₂ eine Verbindung ausgewählt aus der Gruppe der Hexahalogendisilane, Octahalogentrisilane oder der Dekahalogentetrasilane, d.h. eine Verbindungen ausgewählt aus Si₂X₆, Si₃X₈, Si₄X₁₀ mit jeweils X = F, Cl, Br und/oder I. Es kann auch eine Mischung aus einer oder mehreren dieser Verbindungen eingesetzt werden.

Ganz besonders bevorzugt sind Octahalogentrisilane. Von diesen Verbindungen sind wiederum Octafluortrisilan, Octachlortrisilan, Octabromtrisilan, und Octaiodtrisilan, d.h. die Verbindungen der generischen Formel Si₃X₈ mit X = F, Cl, Br oder I, besonders bevorzugt. Ganz besonders bevorzugt wird für das erfindungsgemäße Verfahren Octachlortrisilan eingesetzt.

Der Anteil des mindestens einen Halogensilans an dem bei dem Verfahren eingesetzten Reaktionsgemisch beträgt vorzugsweise mindestens 60, bevorzugt mindestens 80 Gew.-%, bezogen auf die Gesamtmasse des Reaktionsgemisches. Ganz besonders bevorzugt enthält das Reaktionsgemisch nur den mindestens einen Katalysator und das bzw. die Halogensilane.

Bei dem erfindungsgemäßen Verfahren können ein Halogensilan oder mehrere Halogensilane eingesetzt werden. Bevorzugt wird nur ein Halogensilan eingesetzt. Werden mehrere Halogensilane eingesetzt, liegt bevorzugt mindestens ein Halogensilan als Octahalogentrisilan in einem Anteil von mindestens 20, bevorzugt mindestens 80 Gew.-% bezogen auf die Mischung an Halogensilanen vor.

Nach der Bildung des Produktgemisches enthaltend mindestens ein höheres Halogensilan der generischen Formel SiₘX₂ₘ₊₂ mit m > n und X = F, Cl, Br und/oder I und mindestens ein niederes Halogensilan der generischen Formel SiₐX₂ₐ₊₂ mit a = 1-2 und X = F, Cl, Br und/oder I kann dieses Gemisch unter Bildung eines Hydridosilans der generischen Formel SiₘH₂ₘ₊₂ bei Temperaturen von -78 bis 300 °C und Drücken von 500 mbar bis 5 bar durch Zugabe mindestens eines Hydrierungsmittels ausgewählt aus der Gruppe der Metallhydride eines Metalls der 1. bis 3. Hauptgruppe oder der Gruppe der hydridischen Verbindungen bestehend aus LiAlH₄, NaBH₄, iBu₂AlH in einem 2- bis 30-fachen molaren Überschuss, bezogen auf das eingesetzte Halogensilan, hydriert werden. Die Hydrierung kann ohne weitere Aufreinigung oder Isolierung der höheren Halogensilane erfolgen.

Aus dem Produktgemisch sollten SiCl₄ und/oder Si₂Cl₆ abgetrennt werden, wenn eine anschließende Hydrierung durchgeführt werden soll, da sonst SiH₄ und/oder Si₂H₆ entstehen, welche ein beträchtliches Sicherheitsrisiko darstellen. Bevorzugt wird das entstandene Tetrahalogensilan und/oder Hexahalogendisilan von dem entstandenen höheren Halogensilan der generischen Formel SiₘX₂ₘ₊₂ vor der Hydrierung abgetrennt. Weiter bevorzugt erfolgt dies durch Abdestillieren oder Abziehen bei Temperaturen von -30 bis +100 °C, bevorzugt von -30 bis +57 °C, und Drücken von 0,01 bis 1013 mbar, bevorzugt 0,02 bis 0,2 mbar, aus dem Produktgemisch. Bei Bedarf kann auch Si₅Cl₁₂ absublimiert werden, was jedoch für eine nachfolgende Hydrierung, zumindest aus Sicherheitsgründen, nicht notwendig ist.

Der eingesetzte Katalysator wird in der Regel in sehr kleinen Mengen zugesetzt, so dass eine Entfernung aus dem Gemisch im Allgemeinen nicht erfolgen muss.

Auch unter den nach dem erfindungsgemäßen Verfahren herstellbaren Hydridosilanen sind Verbindungen zu verstehen, die im Wesentlichen lediglich Silicium- und Wasserstoffatome enthalten. Diese Hydridosilane können gasförmig, flüssig oder fest sein und sind - im Falle von Feststoffen - im Wesentlichen löslich in Lösemitteln wie Toluol oder Cyclohexan oder in flüssigen Silanen wie Cyclopentasilan. Als Beispiele seien Disilan, Trisilan, Cyclopentasilan und Neopentasilan genannt. Auch diese Hydridosilane können eine lineare oder verzweigte Struktur mit Si-H-Bindungen aufweisen. Das erfindungsgemäße Verfahren eignet sich besonders gut zur Herstellung verzweigter Hydridosilane. Insbesondere eignet es sich besonders gut zur Herstellung von Neopentasilan bzw. hocholigomeren Hydridosilanen, je nach eingesetztem Katalysator.

Bei der Hydrierung liegt das Hydrierungsmittel bevorzugt in einem 10- bis 15-fachen molaren Überschuss, bezogen auf das eingesetzte Halogensilan, vor.

Auch die Hydrierung kann in An- oder Abwesenheit eines Lösemittels erfolgen. Bevorzugt wird die Hydrierung ohne Lösemittel durchgeführt. Wird doch in Anwesenheit eines Lösemittels hydriert, können bevorzugt einsetzbare Lösemittel auswählt werden aus der Gruppe bestehend aus linearen, verzweigten oder cyclischen gesättigten, ungesättigten oder aromatischen Kohlenwasserstoffen mit einem bis 12 Kohlenstoffatomen und Ethern. Besonders bevorzugt sind n-Pentan, n-Hexan, n-Heptan, n-Oktan, n-Dekan, Dodekan, Cyclohexan, Cyclooctan, Cyclodekan, Dicyclopentan, Benzol, Toluol, m-Xylol, p-Xylol, Mesitylen, Tetrahydronaphtalin, Decahydronaphtalin, Diethylether, Dipropylether, Ethylenglycoldimethyl-ether, Ethylenglycoldiethylether, Ethylenglycolmethylethylether, Diethylenglycol-dimethylether, Diethylenglycoldiethylether, Diethylenglycolmethylethylether, Tetrahydrofuran, p-Dioxan, Acetonitril,. Besonders gut einsetzbare Lösemittel sind die Kohlenwasserstoffe n-Pentan, n-Hexan, n-Hexan, n-Oktan, n-Dekan, Dodekan, Cyclohexan, Cyclooctan, Cyclodekan, Benzol, Toluol, m-Xylol, p-Xylol, Mesitylen. Weitere Lösemittel können Alkylaluminiumhalogenide der Form AlR₂Hal (Hal = F, Cl, Br, I; R = Alkyl, Aryl) sein, wobei der Schmelzpunkt < 100 °C sein soll. Das Lösemittel kann 0,01 bis 90 Gew.-% der Gesamtmasse ausmachen.

Die Hydrierung des Halogensilans der generischen Formel SiₘX₂ₘ₊₂ erfolgt besonders bevorzugt bei -10 bis 30 °C und 900 bis 1100 mbar.

Die entstandenen hydrierten Halogensilane können z.B. durch eine Kondensation und/oder Destillation aufgereinigt werden. Eine weitere Aufreinigung kann vorzugsweise eine Aufreinigung mit nicht alkalischem, entgastem - also insbesondere O₂-freiem - Wasser darstellen. Derartige Aufreinigungsmethoden sind dem Fachmann allgemein bekannt.

Nach dem oben beschriebenen Verfahren sind Halogensilane bzw. Gemische enthaltend mindestens ein höheres Halogensilan sowie die daraus hergestellten Hydridosilane bzw. Gemische enthaltend mindestens ein höheres Hydridosilan zugänglich.

Durch die Verwendung eines Gemisches enthaltend mindestens ein höheres Hydridosilan sind elektronische oder optoelektronischeBauteilschichten oder siliciumhaltige Schichten, vorzugsweise elementare Siliciumschichten zugänglich, wobei das Gemisch nach dem oben beschriebenen Verfahren hergestellt wurde.

Schließlich ist auch Gegenstand der Erfindung die Verwendung tertiärer Phosphane, bevorzugt ausgewählt aus der Gruppe umfassend tertiäre Alkylphosphane, tertiäre Arylphosphane, tertiäre zweizähnige Phosphane oder Mischungen davon, bei der Herstellung höherer Halogensilane. Besonders bevorzugt ist die Verwendung dieser Phosphane, z. B. Trimethylphosphan, Triethylphosphan, Triphenylphosphan oder Mischungen davon, als Katalysator für die Disproportionierung von Halogensilanen der generischen Formel SiₙX₂ₙ₊₂ mit n ≥ 2 und X = F, Cl, Br und/oder I bei der Herstellung höherer Halogensilane der generischen Formel SiₘX₂ₘ₊₂ mit m > n und X = F, Cl, Br und/oder I.

### Beispiele

### Beispiel 1

Disproportionierung: 10,2 g (0,028 mol) Octachlortrisilan wurden bei Raumtemperatur unter Rühren 16,3 mg (2,1x10⁻⁴ mol; 0,75mol%) Trimethylphosphan PMe₃ in 0,2 ml Diethylether versetzt. Nach Rühren über Nacht bei Raumtemperatur und Entfernung der flüchtigen Bestandteile (Diethylether, Si₂Cl₆, SiCl₄) von der resultierenden klaren Lösung bei 40 °C im Vakuum (0,05 mbar) verbleibt das Produkt als ölige Flüssigkeit, die mittels ²⁹Si-NMR Spektroskopie als ein Gemisch von Oligochlorsilanen verschiedener Kettenlänge identifiziert werden konnte. Ausbeute: 5,3 g.

Hydrierung: 5,3 g des erhaltenen Oligochlorsilangemisches wurden in 70 mL Toluol gelöst und unter Eiskühlung langsam mit 30 mL einer 2,1 M Lösung von LiAlH₄ in Diethylether versetzt. Anschließend wurde über Nacht bei Raumtemperatur gerührt. Das Reaktionsgemisch wurde mit 150 mL entgaster 10 %-iger H₂SO₄ aufgearbeitet und die organische Phase mit Na₂SO₄ getrocknet. Nach Entfernung der flüchtigen Bestandteile von der resultierenden klaren Lösung bei 40 °C im Vakuum (0,05 mbar) verbleibt das Produkt als ölige Flüssigkeit, die mittels ¹H- und ²⁹Si-NMR spektroskopisch als ein Gemisch von höheren Hydridosilanen verschiedener Kettenlänge identifiziert werden konnte. Eine Analyse des erhaltenen Produktes mittels GPC ergab folgende Resultate: Mn = 450 g/mol; Mw = 580 g/mol; Mw/Mn = 1,289. Ausbeute: 0,8 g.

## Patentansprüche

1. Verfahren zur Herstellung eines höheren Halogensilans, wobei mindestens ein Halogensilan der generischen Formel SiₙX₂ₙ₊₂ mit n ≥ 2 und X = F, Cl, Br und/oder I eingesetzt und durch Disproportionierung zu einem Produktgemisch enthaltend mindestens ein höheres Halogensilan der generischen Formel SiₘX₂ₘ₊₂ mit m > n und X = F, Cl, Br und/oder I und mindestens ein niederes Halogensilan der generischen Formel SiₐX₂ₐ₊₂ mit a = 1-2 und X = F, Cl, Br und/oder I umgesetzt wird, **dadurch gekennzeichnet, dass** die Umsetzung durch mindestens ein tertiäres Phosphan ausgewählt aus der Gruppe, die tertiäre Alkylphosphane, tertiäre Arylphosphane, tertiäre zweizähnige Phosphane oder Mischungen davon umfasst, katalysiert wird.

2. Verfahren nach Anspruch 1, wobei das tertiäre Phosphan ausgewählt ist aus der Gruppe die Trimethylphosphan, Triethylphosphan, Triphenylphosphan, oder Mischungen davon umfasst.

3. Verfahren nach einem der vorhergehenden Ansprüche, wobei das Halogensilan der generischen Formel SiₙX₂ₙ₊₂ ein lineares Silan ist.

4. Verfahren nach einem der vorhergehenden Ansprüche, wobei das Halogensilan der generischen Formel SiₙX₂ₙ₊₂ ausgewählt ist aus Si₂X₆, Si₃X₈, Si₄X₁₀ mit jeweils X = F, Cl, Br und/oder I oder eine Mischung aus ein oder mehreren dieser Verbindungen.

5. Verfahren nach einem der vorhergehenden Ansprüche, wobei das mindestens eine höhere Halogensilan der generischen Formel SiₘX₂ₘ₊₂ unter Bildung eines Hydridosilans der generischen Formel SiₘH₂ₘ₊₂ bei Temperaturen von -78 bis 300 °C und Drücken von 500 mbar bis 5 bar durch Zugabe mindestens eines Hydrierungsmittels ausgewählt aus der Gruppe der Metallhydride eines Metalls der 1. bis 3. Hauptgruppe oder der Gruppe der hydridischen Verbindungen bestehend aus LiAlH₄, NaBH₄, iBu₂AlH in einem 2- bis 30-fachen bezogen auf das eingesetzte Halogensilan hydriert wird.

6. Verfahren nach Anspruch 5, wobei vor der Hydrierung das mindestens eine niedere Halogensilan aus dem Produktgemisch entfernt wird, bevorzugt durch Abdestillieren oder Abziehen bei Temperaturen von -30 bis +100 °C und Drücken von 0,01 bis 1013 mbar.

7. Verfahren nach Anspruch 5, wobei das Hydrierungsmittel in einem 10- bis 15-fachen molaren Überschuß, bezogen auf das eingesetzte Halogensilan, vorliegt.

8. Verwendung tertiärer Phosphane ausgewählt aus der Gruppe umfassend tertiäre Alkylphosphane, tertiäre Arylphosphane, tertiäre zweizähnige Phosphane oder Mischungen davon bei der Herstellung höherer Halogensilane.

## Claims

1. Process for preparing a higher halosilane using at least one halosilane of the generic formula SiₙX₂ₙ₊₂ where n ≥ 2 and X = F, Cl, Br and/or I which is converted by disproportionation to a product mixture comprising at least one higher halosilane of the generic formula SiₘX₂ₘ₊₂ where m > n and X = F, Cl, Br and/or I and at least one lower halosilane of the generic formula SiₐX₂ₐ₊₂ where a = 1-2 and X = F, Cl, Br and/or I, **characterized in that** the reaction is catalysed by at least one tertiary phosphine selected from the group comprising the tertiary alkylphosphines, tertiary arylphosphines, tertiary bidentate phosphines and mixtures thereof.

2. Process according to Claim 1, wherein the tertiary phosphine is selected from the group comprising trimethylphosphine, triethylphosphine, triphenylphosphine and mixtures thereof.

3. Process according to either of the preceding claims, wherein the halosilane of the generic formula SiₙX₂ₙ₊₂ is a linear silane.

4. Process according to any of the preceding claims, wherein the halosilane of the generic formula SiₙX₂ₙ₊₂ is selected from Si₂X₆, Si₃X₈, Si₄X₁₀ where each X = F, Cl, Br and/or I, and a mixture of one or more of these compounds.

5. Process according to any of the preceding claims, wherein the at least one higher halosilane of the generic formula SiₘX₂ₘ₊₂ is hydrogenated to form a hydridosilane of the generic formula SiₘH₂ₘ₊₂ at temperatures of -78 to 300°C and pressures of 500 mbar to 5 bar by adding at least one hydrogenating agent selected from the group of the metal hydrides of a metal of main groups 1 to 3 or the group of the hydridic compounds consisting of LiAlH₄, NaBH₄, iBu₂AlH in a 2- to 30-fold based on the halosilane used.

6. Process according to Claim 5, wherein the hydrogenation is preceded by removal of the at least one lower halosilane from the product mixture, preferably by distillative removal or drawing off at temperatures of -30 to +100°C and pressures of 0.01 to 1013 mbar.

7. Process according to Claim 5, wherein the hydrogenating agent is present in a 10- to 15-fold molar excess, based on the halosilane used.

8. Use of tertiary phosphines selected from the group comprising tertiary alkylphosphines, tertiary arylphosphines, tertiary bidentate phosphines and mixtures thereof in the preparation of higher halosilanes.

## Revendications

1. Procédé de fabrication d'un halogénosilane supérieur, selon lequel au moins un halogénosilane de formule générique SiₙX₂ₙ₊₂ avec n ≥ 2 et X = F, Cl, Br et/ou I est utilisé et transformé par dismutation en un mélange de produits contenant au moins un halogénosilane supérieur de formule générique SiₘX₂ₘ₊₂ avec m > n et X = F, Cl, Br et/ou I, et au moins un halogénosilane inférieur de formule générique SiₐX₂ₐ₊₂ avec a = 1 à 2 et X = F, Cl, Br et/ou I, **caractérisé en ce que** la réaction est catalysée par au moins un phosphane tertiaire choisi dans le groupe comprenant les alkylphosphanes tertiaires, les arylphosphanes tertiaires, les phosphanes bidentates tertiaires ou leurs mélanges.

2. Procédé selon la revendication 1, dans lequel le phosphane tertiaire est choisi dans le groupe comprenant le triméthylphosphane, le triéthylphosphane, le triphénylphosphane ou leurs mélanges.

3. Procédé selon l'une quelconque des revendications précédentes, dans lequel l'halogénosilane de formule générique SiₙX₂ₙ₊₂ est un silane linéaire.

4. Procédé selon l'une quelconque des revendications précédentes, dans lequel l'halogénosilane de formule générique SiₙX₂ₙ₊₂ est choisi parmi Si₂X₆, Si₃X₈, Si₄X₁₀, avec à chaque fois X = F, Cl, Br et/ou I ou un mélange d'un ou de plusieurs de ces composés.

5. Procédé selon l'une quelconque des revendications précédentes, dans lequel ledit au moins un halogénosilane supérieur de formule générique SiₘX₂ₘ₊₂ est hydrogéné avec formation d'un hydridosilane de formule générique SiₘH₂ₘ₊₂ à des températures de -78 à 300 °C et des pressions de 500 mbar à 5 bar par ajout d'au moins un agent d'hydrogénation choisi dans le groupe des hydrures métalliques d'un métal des groupes principaux 1 à 3 ou dans le groupe des composés hydruriques constitué par LiAlH₄, NaBH₄, iBu₂AlH en un 2 à 30 fois par rapport à l'halogénosilane utilisé.

6. Procédé selon la revendication 5, dans lequel, avant l'hydrogénation, ledit au moins un halogénosilane inférieur est éliminé du mélange de produits, de préférence par distillation ou extraction à des températures de -30 à +100 °C et des pressions de 0,01 à 1 013 mbar.

7. Procédé selon la revendication 5, dans lequel l'agent d'hydrogénation est présent en un excès molaire de 10 à 15, par rapport à l'halogénosilane utilisé.

8. Utilisation de phosphanes tertiaires choisis dans le groupe comprenant les alkylphosphanes tertiaires, les arylphosphanes tertiaires, les phosphanes bidentates tertiaires ou leurs mélanges lors de la fabrication d'halogénosilanes supérieurs.
